# EUROPEAN PATENT APPLICATION

(11) **EP 4 683 076 A1**
(43) Date of publication of application: **21.01.2026**
(21) Application number: 24895448.9
(22) Date of filing: 20.05.2024
(51) Int. Cl.: H01M 50/291

(54) **ENERGY STORAGE BOX AND ENERGY STORAGE APPARATUS**

(30) Priority: 28.11.2023 CN 202311621562
(71) Applicant: Contemporary Amperex Technology Co., Limited, Ningde, Fujian 352100 (CN)
(72) Inventor: LUO, Hailong, Ningde, Fujian 352100 (CN); LU, Bin, Ningde, Fujian 352100 (CN); GAN, Qianyi, Ningde, Fujian 352100 (CN); LIU, Yingxue, Ningde, Fujian 352100 (CN)
(74) Representative: Ran, Handong
(86) International application number: PCT/CN2024/094268
(87) International publication number: WO 2025/112338

(57) **Abstract**

An energy storage box (100) and an energy storage apparatus. The energy storage box (100) comprises a box body (10), wherein the box body (10) defines a mounting space (11), mounting beams (12) are provided in the mounting space (11) and located at the top of the mounting space (11), the mounting beams (12) are fixed to the box body (10), and a bottom wall (13) of the mounting space (11) and the mounting beams (12) are opposite each other and spaced apart in the direction of height of the energy storage box (100), the bottom wall (13) of the mounting space (11) being of a plate-shaped structure; and mounting columns (20), wherein the mounting columns (20) are arranged in the mounting space (11), two ends of each mounting column (20) respectively being fixedly connected to one mounting beam (12) and the bottom wall (13) of the mounting space (11).

## Description

### CROSS-REFERENCE TO RELATED APPLICATION

The present application is presented based on Chinese Patent Application No. 202311621562.3 filed on November 28, 2023, and claims the priority to the Chinese Patent Application described above, the content of which is incorporated herein by reference in its entirety.

### TECHNICAL FIELD

The present application relates to the field of energy storage, and in particular, to an energy storage case and an energy storage device having the energy storage case.

### BACKGROUND

In the related art, an existing energy storage device includes an energy storage case and an energy storage unit. The energy storage unit is disposed in the energy storage case. Mounting posts are provided in the case body of the energy storage case, and the energy storage unit is mounted on the mounting frame of the mounting post. However, the existing energy storage case has poor structural strength, and after the energy storage unit is mounted on the mounting frame, the energy storage case is likely to deform, affecting the service life of the energy storage case.

### SUMMARY

The present application aims to solve one of the technical problems in the related art, at least to a certain extent.

To this end, a first objective of the present application is to provide an energy storage case. The mounting post of the energy storage case is supported between the mounting beam and the bottom wall of the mounting space, such that the structural strength of the energy storage case can be enhanced, thereby reducing the risk of deformation of the energy storage case and thus prolonging the service life of the energy storage case.

Another objective of the present application is to provide an energy storage device.

In a first aspect, embodiments of the present application provide an energy storage case. The energy storage case includes:
a case body, where the case body defines a mounting space, a mounting beam is provided in the mounting space and is disposed at a top of the mounting space, the mounting beam is fixed to the case body, a bottom wall of the mounting space is opposite to and spaced apart from the mounting beam in a height direction of the energy storage case, and the bottom wall of the mounting space is a plate-shaped structure;
a mounting post, where the mounting post is disposed in the mounting space, and two ends of the mounting post are fixedly connected to the mounting beam and the bottom wall of the mounting space, respectively.

According to the energy storage case of the embodiments of the present application, since two ends of the mounting post are fixedly connected to the mounting beam and the bottom wall of the mounting space, respectively, the mounting post can be supported between the mounting beam and the bottom wall of the mounting space. Since the bottom wall of the mounting space is a plate-shaped structure, the structural strength of the energy storage case can be enhanced, thereby reducing the risk of deformation of the energy storage case and thus prolonging the service life of the energy storage case.

In a second aspect, the embodiments of the present application further provide an energy storage device. The energy storage device includes:
an energy storage unit;
an energy storage case, where the energy storage case is the energy storage case described above, and the energy storage unit is disposed in the mounting space and is assembled on the mounting frame.

The energy storage device according to the embodiments of the present application is provided with an energy storage case, which can prolong the service life of the energy storage device.

The additional aspects and the advantages of the present application will be partially provided in the following description, will partially become apparent from the following description, or will be learned through the practice of the present application.

### BRIEF DESCRIPTION OF THE DRAWINGS

FIG. 1 is a schematic diagram of an energy storage case according to an embodiment of the present application;
FIG. 2 is a schematic diagram of an energy storage case in another view according to an embodiment of the present application;
FIG. 3 is a schematic diagram of the internal structure of an energy storage case according to an embodiment of the present application;
FIG. 4 is a schematic diagram of the internal structure of an energy storage case according to an embodiment of the present application;
FIG. 5 is a schematic diagram of the assembly of a mounting post and a mounting frame according to an embodiment of the present application;
FIG. 6 is a schematic diagram in another view after a mounting post and a mounting frame are assembled according to an embodiment of the present application;
FIG. 7 is an enlarged view of part A in FIG. 6;
FIG. 8 is a schematic diagram of a bottom wall of an energy storage case according to an embodiment of the present application; and
FIG. 9 is a schematic cross-sectional view of a mounting post according to an embodiment of the present application.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is obvious that the described embodiments are some, but not all, embodiments of the present application. Based on the embodiments in the present application, all other embodiments obtained by those of ordinary skill in the art without creative work shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is only an association relationship that describes the associated objects, and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

In the embodiments of the present application, the energy storage case 100 is a case structure of the energy storage device, and the energy storage unit of the energy storage device is mounted in the energy storage case 100.

The energy storage unit may be a battery, a battery module, a battery cell, or the like.

In the embodiments of the present application, the battery cell may be a secondary battery. The secondary battery refers to a battery cell that can be reused by activating the active material through charging after the battery cell is discharged.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, and the like. This is not limited in the embodiments of the present application.

The battery mentioned in the embodiments of the present application refers to a single physical module including one or a plurality of battery cells to provide higher voltage and capacity. When there are a plurality of battery cells, the plurality of battery cells are connected in series, in parallel, or in series-parallel by a busbar component.

In some embodiments, the battery may be a battery module, and when a plurality of battery cells are provided, the plurality of battery cells are disposed and fixed to form one battery module.

In some embodiments, the battery may be a battery pack. The battery pack includes a case and a battery cell, and the battery cell or the battery module is accommodated in the case.

Battery technology advancement requires consideration of various design factors at the same time, such as energy density, cycle life, discharge capacity, charging and discharging rate, and other performance parameters. In addition, the safety performance of the battery also needs to be considered.

In an energy storage device, the energy storage case serves as the housing of the energy storage device to protect the energy storage unit. The energy storage unit is disposed in the energy storage case. Mounting posts are provided in the case body of the energy storage case, and the energy storage unit is mounted on the mounting frame of the mounting post. The existing energy storage case has poor structural strength, and after the energy storage unit is mounted on the mounting frame, the energy storage case is likely to deform under the action of gravity of the energy storage unit, affecting the service life of the energy storage case.

In view of the foregoing, the embodiments of the present application provide an energy storage case. The energy storage case includes a case body and a mounting post. The case body defines a mounting space, and a mounting beam is disposed in the mounting space. The mounting beam is fixed to the case body, and a bottom wall of the mounting space is a plate-shaped structure. The mounting post is disposed in the mounting space, and two ends of the mounting post are fixedly connected to the mounting beam and the bottom wall of the mounting space, respectively.

In such an energy storage case, since the bottom wall of the mounting space is configured as a plate-shaped structure, and two ends of the mounting post are fixedly connected to the mounting beam and the bottom wall of the mounting space, respectively, the structural strength of the energy storage case can be enhanced, thereby reducing the risk of deformation of the energy storage case and thus prolonging the service life of the energy storage case.

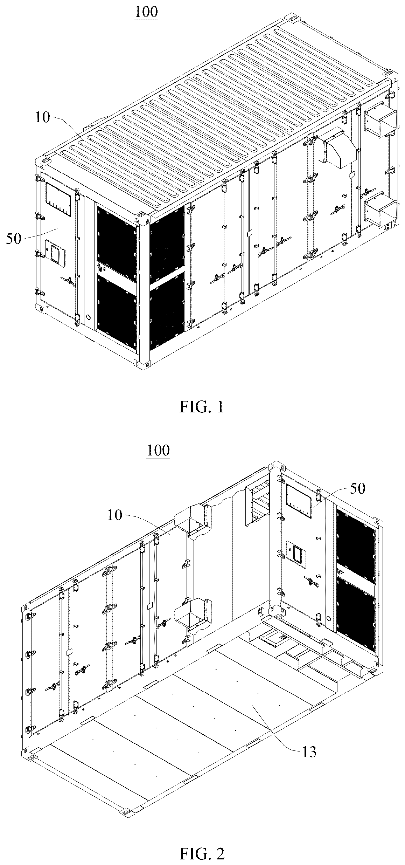

An energy storage case 100 according to the embodiments of the present application is described below with reference to FIGs. 1 to 9. The energy storage device includes an energy storage unit and an energy storage case 100, and the energy storage unit is mounted in the energy storage case 100.

The energy storage case 100 according to the embodiments of the present application includes: a case body 10 and a mounting post 20. The case body 10 defines a mounting space 11, a mounting beam 12 is provided in the mounting space 11 and is disposed at the top of the mounting space 11, the mounting beam 12 is fixed to the case body 10, a bottom wall 13 of the mounting space 11 is opposite to and spaced apart from the mounting beam 12 in the height direction of the energy storage case 100, and the bottom wall 13 of the mounting space 11 is a plate-shaped structure. The mounting post 20 is disposed in the mounting space 11, and two ends of the mounting post 20 are fixedly connected to the mounting beam 12 and the bottom wall 13 of the mounting space 11, respectively.

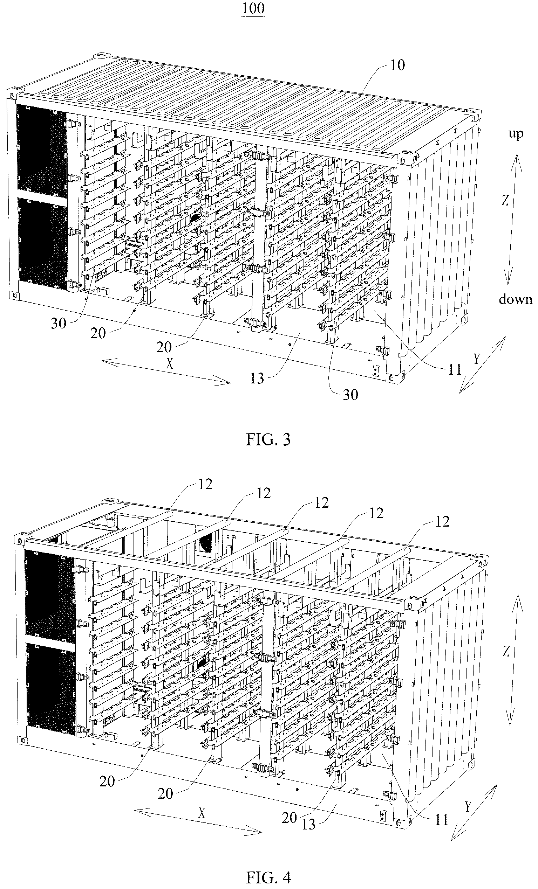

As shown in FIG. 3, the case body 10 defines the mounting space 11, the mounting beam 12 is provided in the mounting space 11, and in the up-down direction of the energy storage case 100, i.e., in the Z direction in FIG. 3, the mounting beam 12 is disposed at the top of the mounting space 11. The mounting beam 12 is fixedly connected to the case body 10, the mounting beam 12 may be connected to the case body 10 by welding, and the mounting beam 12 may also be connected to the case body 10 by bolting. The bottom wall 13 of the mounting space 11 and the mounting beam 12 are disposed opposite to each other in the height direction of the energy storage case 100, and the bottom wall 13 of the mounting space 11 is spaced apart from the mounting beam 12 in the height direction of the energy storage case 100. The bottom wall 13 of the energy storage case 100 and the bottom wall 13 of the mounting space 11 are the same wall. The bottom wall 13 of the mounting space 11 is a plate-shaped structure. It should be noted that the bottom wall 13 of the mounting space 11 is an entire plate-shaped structure, or the bottom wall 13 of the mounting space 11 is similar to an entire plate-shaped structure. Two ends of the mounting post 20 are fixedly connected to the mounting beam 12 and the bottom wall 13 of the mounting space 11, respectively. It can also be understood that the upper end of the mounting post 20 is fixedly connected to the mounting beam 12, and the lower end of the mounting post 20 is fixedly connected to the bottom wall 13 of the mounting space 11. The mounting post 20 may be connected to the mounting beam 12 and the bottom wall 13 of the mounting space 11 by welding, and the mounting post 20 may also be connected to the mounting beam 12 and the bottom wall 13 of the mounting space 11 by bolting.

In the present application, by configuring the bottom wall 13 of the mounting space 11 as a plate-shaped structure, the structural strength of the bottom wall 13 of the mounting space 11 can be enhanced, thereby reinforcing the supporting strength of the bottom wall 13 of the mounting space 11. Since two ends of the mounting post 20 are fixedly connected to the mounting beam 12 and the bottom wall 13 of the mounting space 11, respectively, the mounting post 20 can be reliably supported between the mounting beam 12 and the bottom wall 13 of the mounting space 11, thereby enhancing the overall structural strength of the energy storage case 100. After the energy storage unit is placed into the energy storage case 100, the risk of deformation of the energy storage case 100 can be reduced, thereby prolonging the service life of the energy storage case 100.

In the above technical solution, since two ends of the mounting post 20 are fixedly connected to the mounting beam 12 and the bottom wall 13 of the mounting space 11, respectively, the mounting post 20 can be supported between the mounting beam 12 and the bottom wall 13 of the mounting space 11. Since the bottom wall 13 of the mounting space 11 is a plate-shaped structure, the structural strength of the energy storage case 100 can be enhanced, thereby reducing the risk of deformation of the energy storage case 100 and thus prolonging the service life of the energy storage case 100.

According to some embodiments of the present application, as shown in FIGs. 3 to 6, the energy storage case 100 may further include: a mounting frame 30. The mounting frame 30 is disposed in the mounting space 11 and is provided with a limiting portion 31. The limiting portion 31 is fitted and assembled with the mounting post 20 to limit the movement of the mounting frame 30 in the height direction of the energy storage case 100, and the mounting frame 30 is connected to the mounting post 20 by riveting.

The mounting frame 30 is configured to mount the energy storage unit, and the mounting frame 30 can support the energy storage unit. The mounting frame 30 is fitted and assembled with the mounting post 20, the mounting frame 30 is fixedly mounted on the mounting post 20, and the mounting frame 30 is provided with a limiting portion 31. When the limiting portion 31 is fitted and assembled with the mounting post 20, the limiting portion 31 cooperates with the mounting post 20 in a limiting manner. As an example, the limiting portion 31 is inserted into the groove structure or the hole structure of the mounting post 20, such that the mounting frame 30 can be limited from moving relative to the mounting post 20 in the height direction of the energy storage case 100. In addition, the mounting frame 30 is connected to the mounting post 20 by riveting. As an example, the mounting frame 30 is riveted to the mounting post 20 via a rivet 60.

It should be noted that the existing mounting frame 30 and the mounting post 20 are connected by welding, and the welding process is complex and time-consuming, which affects the assembly efficiency of the energy storage case 100. However, in the present application, since the limiting portion 31 is fitted and assembled with the mounting post 20, and the mounting frame 30 and the mounting post 20 are connected by riveting, the mounting frame 30 and the mounting post 20 are not required to be welded. Therefore, the assembly process between the mounting frame 30 and the mounting post 20 can be simplified, and the assembly time of the mounting frame 30 and the mounting post 20 can also be reduced, thereby improving the assembly efficiency of the energy storage case 100.

In the above technical solution, since the limiting portion 31 is fitted and assembled with the mounting post 20, and the mounting frame 30 and the mounting post 20 are connected by riveting, the mounting frame 30 and the mounting post 20 are not required to be welded. Therefore, the assembly process between the mounting frame 30 and the mounting post 20 can be simplified, and the assembly time of the mounting frame 30 and the mounting post 20 can also be reduced, thereby improving the assembly efficiency of the energy storage case 100.

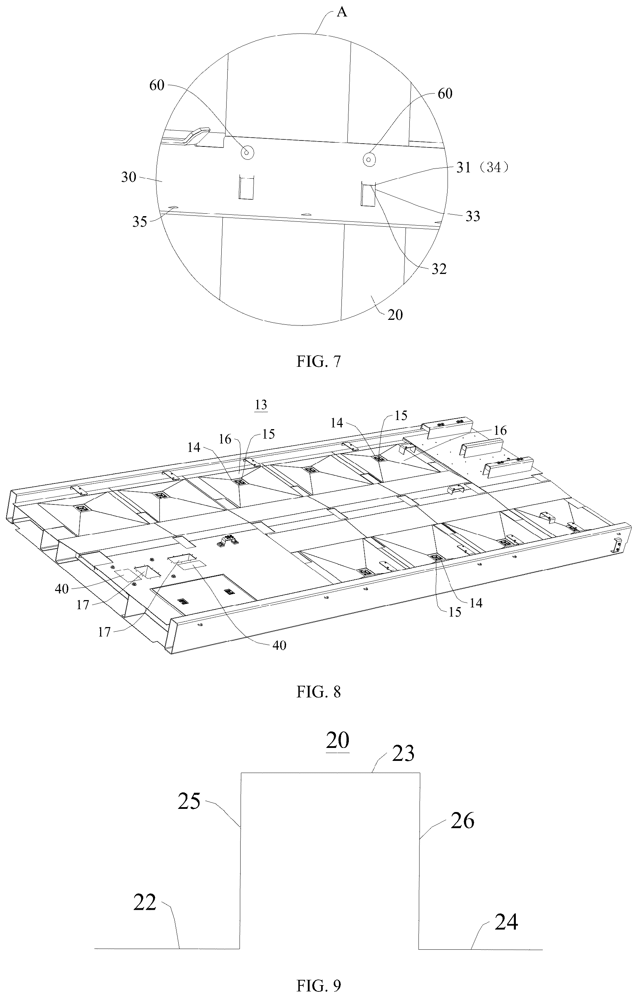

According to some embodiments of the present application, as shown in FIG. 7, the mounting post 20 has an insertion hole 32, and the limiting portion 31 is assembled in the insertion hole 32 and is adapted to abut against the inner wall of the insertion hole 32.

When the mounting frame 30 is fitted and assembled with the mounting post 20, the limiting portion 31 is inserted into the insertion hole 32, and the limiting portion 31 can abut against the inner wall surface of the insertion hole 32 for limiting, such that the mounting frame 30 can be limited from moving relative to the mounting post 20, thereby enabling the mounting frame 30 and the mounting post 20 to be reliably assembled. In addition, before the mounting frame 30 and the mounting post 20 are connected by riveting, the limiting portion 31 is inserted into the insertion hole 32, such that the mounting frame 30 can be positioned relative to the mounting post 20, thereby facilitating the riveted connection between the mounting frame 30 and the mounting post 20, and improving the assembly efficiency between the mounting frame 30 and the mounting post 20.

In the above technical solution, the limiting portion 31 is inserted into the insertion hole 32, and the limiting portion 31 can abut against the inner wall surface of the insertion hole 32 for limiting, such that the mounting frame 30 can be limited from moving relative to the mounting post 20, thereby enabling the mounting frame 30 and the mounting post 20 to be reliably assembled. In addition, before the mounting frame 30 and the mounting post 20 are connected by riveting, the limiting portion 31 is inserted into the insertion hole 32, such that the mounting frame 30 can be positioned relative to the mounting post 20, thereby facilitating the riveted connection between the mounting frame 30 and the mounting post 20, and improving the assembly efficiency between the mounting frame 30 and the mounting post 20.

According to some embodiments of the present application, as shown in FIG. 7, the mounting frame 30 has a through hole structure 33, the inner wall of the through hole structure 33 is connected to a flanged structure 34 bent toward the mounting post 20, the flanged structure 34 is configured as the limiting portion 31, and the flanged structure 34 is disposed in the insertion hole 32 in a penetrating manner.

The mounting frame 30 has the through hole structure 33, the through hole structure 33 penetrates through the mounting frame 30 in the thickness direction of the mounting frame 30, and the inner wall of the through hole structure 33 is connected to a flanged structure 34. One end of the flanged structure 34 is connected to the inner wall of the through hole structure 33, the flanged structure 34 is bent toward the mounting post 20, and the flanged structure 34 and the mounting frame 30 may be integrally formed. The flanged structure 34 is configured as the limiting portion 31. When the mounting frame 30 is fitted and assembled with the mounting post 20, the flanged structure 34 is disposed in the insertion hole 32 in a penetrating manner, and the flanged structure 34 can abut against the inner wall surface of the insertion hole 32 for limiting, such that the mounting frame 30 can be limited from moving relative to the mounting post 20, thereby enabling the mounting frame 30 and the mounting post 20 to be reliably assembled. In addition, before the mounting frame 30 and the mounting post 20 are connected by riveting, the flanged structure 34 is disposed in the insertion hole 32 in a penetrating manner, such that the mounting frame 30 can be positioned relative to the mounting post 20, thereby facilitating the riveted connection between the mounting frame 30 and the mounting post 20, and improving the assembly efficiency between the mounting frame 30 and the mounting post 20.

In the above technical solution, since the mounting frame 30 has the through hole structure 33, and the inner wall of the through hole structure 33 is connected to the flanged structure 34 bent toward the mounting post 20, the configuration of the limiting portion 31 can be achieved, and the structure of the mounting frame 30 can be simplified. Furthermore, when the mounting frame is fitted and assembled with the mounting post 20, the flanged structure 34 is disposed in the insertion hole 32 in a penetrating manner, and the flanged structure 34 can abut against the inner wall surface of the insertion hole 32 for limiting, such that the mounting frame 30 can be limited from moving relative to the mounting post 20, thereby enabling the mounting frame 30 and the mounting post 20 to be reliably assembled. In addition, before the mounting frame 30 and the mounting post 20 are connected by riveting, the flanged structure 34 is disposed in the insertion hole 32 in a penetrating manner, such that the mounting frame 30 can be positioned relative to the mounting post 20, thereby facilitating the riveted connection between the mounting frame 30 and the mounting post 20, and improving the assembly efficiency between the mounting frame 30 and the mounting post 20.

According to some embodiments of the present application, as shown in FIG. 7, the mounting post 20 has a first riveting hole, and the mounting frame 30 has a second riveting hole corresponding to the first riveting hole.

The mounting post 20 has a first riveting hole, the mounting frame 30 has a second riveting hole, and the first riveting hole is formed corresponding to the second riveting hole. When the mounting frame 30 is fitted and assembled with the mounting post 20, the first riveting hole and the second riveting hole are formed opposite to each other. The rivet 60 simultaneously passes through the first riveting hole and the second riveting hole to enable riveted connection between the mounting frame 30 and the mounting post 20, thereby achieving fixed assembly of the mounting frame 30 and the mounting post 20.

In the above technical solution, by providing the first riveting hole and the second riveting hole, when the mounting frame 30 is fitted and assembled with the mounting post 20, the first riveting hole and the second riveting hole are formed opposite to each other. The rivet 60 simultaneously passes through the first riveting hole and the second riveting hole to enable riveted connection between the mounting frame 30 and the mounting post 20, thereby achieving fixed assembly of the mounting frame 30 and the mounting post 20.

According to some embodiments of the present application, as shown in FIG. 7, a plurality of first riveting holes and a plurality of second riveting holes may be provided. The plurality of first riveting holes and the plurality of second riveting holes are formed in one-to-one correspondence. A plurality of rivets 60 simultaneously pass through the corresponding first riveting holes and the corresponding second riveting holes, such that the mounting frame 30 and the mounting post 20 can be firmly assembled, and assembly reliability between the mounting frame 30 and the mounting post 20 can be improved.

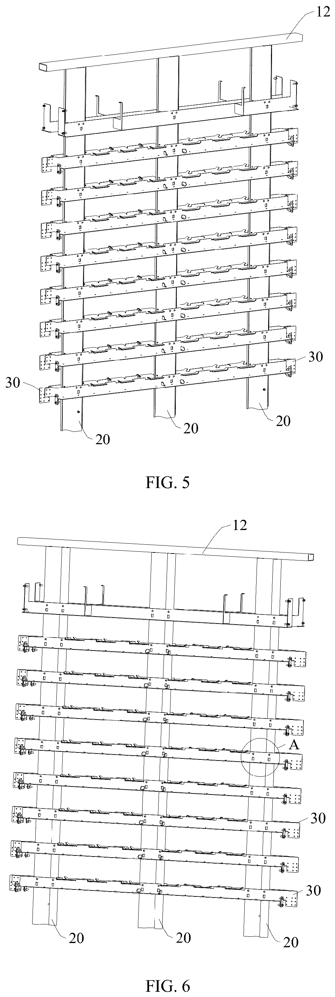

According to some embodiments of the present application, as shown in FIGs. 5 and 9, the mounting post 20 includes a first assembly portion 22, a second assembly portion 23, and a third assembly portion 24. The first assembly portion 22 and the third assembly portion 24 are disposed on the same side of the second assembly portion 23, the second assembly portion 23 is fitted and assembled with the corresponding mounting frame 30, and the first assembly portion 22 and the third assembly portion 24 are fitted and assembled with the corresponding mounting frame 30.

The mounting post 20 may be an integrally formed part. The mounting post 20 may include a first assembly portion 22, a second assembly portion 23, and a third assembly portion 24. The first assembly portion 22, the second assembly portion 23, and the third assembly portion 24 may all be plate-shaped structures. The second assembly portion 23 may be provided with the first riveting hole and the insertion hole 32. At least one of the first assembly portion 22 and the third assembly portion 24 is provided with the first riveting hole and the insertion hole 32. The first assembly portion 22 and the third assembly portion 24 are disposed on the same side of the second assembly portion 23, and the first assembly portion 22 is disposed opposite to and spaced apart from the third assembly portion 24. The second assembly portion 23 is fitted and assembled with the corresponding mounting frame 30, and the first assembly portion 22 and the third assembly portion 24 are fitted and assembled with the corresponding mounting frame 30. As an example, mounting frames 30 are disposed on two opposite sides of the same mounting post 20. The mounting post 20 is disposed between the two mounting frames 30. The mounting frame 30 disposed on the side, facing away from the first assembly portion 22, of the second assembly portion 23 is fitted and assembled with the second assembly portion 23, and the mounting frame 30 disposed on the side, facing away from the second assembly portion 23, of the first assembly portion 22 is fitted and assembled with the first assembly portion 22 and the third assembly portion 24. By providing the first assembly portion 22, the second assembly portion 23, and the third assembly portion 24, mounting frames 30 can be mounted on two opposite sides of one mounting post 20, and the effect of assembling multiple mounting frames 30 with the same mounting post 20 can be achieved, thereby facilitating the mounting of more energy storage units in the energy storage case 100.

In the above technical solution, by providing the first assembly portion 22, the second assembly portion 23, and the third assembly portion 24, mounting frames 30 can be mounted on two opposite sides of one mounting post 20, and the effect of assembling multiple mounting frames 30 with the same mounting post 20 can be achieved, thereby facilitating the mounting of more energy storage units in the energy storage case 100.

According to some embodiments of the present application, as shown in FIGs. 5 and 9, the mounting post 20 may further include a first connecting portion 25 and a second connecting portion 26. The first connecting portion 25 is connected between the first assembly portion 22 and the second assembly portion 23, and the second connecting portion 26 is connected between the second assembly portion 23 and the third assembly portion 24.

The mounting post 20 may further include a first connecting portion 25 and a second connecting portion 26. The first connecting portion 25 and the second connecting portion 26 may both be plate-shaped structures. In the arrangement direction of the first assembly portion 22 and the second assembly portion 23, the first connecting portion 25 has a first side and a second side opposite to each other. The first side of the first connecting portion 25 is connected to the first assembly portion 22, and the second side of the first connecting portion 25 is connected to the second assembly portion 23. The second connecting portion 26 has a third side and a fourth side opposite to each other. The third side of the second connecting portion 26 is connected to the second assembly portion 23, and the fourth side of the second connecting portion 26 is connected to the third assembly portion 24. Therefore, the first assembly portion 22 and the second assembly portion 23 are spaced apart from each other in the arrangement direction of the first assembly portion 22 and the second assembly portion 23, and the second assembly portion 23 and the third assembly portion 24 are also spaced apart from each other in the arrangement direction of the first assembly portion 22 and the second assembly portion 23. In the direction perpendicular to the arrangement direction of the first assembly portion 22 and the second assembly portion 23, the first assembly portion 22 and the third assembly portion 24 are opposite to and spaced apart from each other. Since the first connecting portion 25 and the second connecting portion 26 are provided, the first connecting portion 25 is connected between the first assembly portion 22 and the second assembly portion 23, and the second connecting portion 26 is connected between the second assembly portion 23 and the third assembly portion 24, it is beneficial for the mounting post 20 to form a "Z"-shaped structure, or for the mounting post 20 to form a similar "Z"-shaped structure, thereby enhancing the structural strength of the mounting post 20. When a plurality of mounting frames 30 are assembled on the same mounting post 20 simultaneously, the risk of deformation of the mounting post 20 is reduced, and the mounting post 20 is reliably supported between the mounting beam 12 and the bottom wall 13 of the mounting space 11, which is more conducive to enhancing the structural strength of the energy storage case 100.

In the above technical solution, since the first connecting portion 25 and the second connecting portion 26 are provided, the first connecting portion 25 is connected between the first assembly portion 22 and the second assembly portion 23, and the second connecting portion 26 is connected between the second assembly portion 23 and the third assembly portion 24, it is beneficial for the mounting post 20 to form a "Z"-shaped structure, or for the mounting post 20 to form a similar "Z"-shaped structure, thereby enhancing the structural strength of the mounting post 20. When a plurality of mounting frames 30 are assembled on the same mounting post 20 simultaneously, the risk of deformation of the mounting post 20 is reduced, and the mounting post 20 is reliably supported between the mounting beam 12 and the bottom wall 13 of the mounting space 11, which is more conducive to enhancing the structural strength of the energy storage case 100.

According to some embodiments of the present application, as shown in FIGs. 5 and 9, the first connecting portion 25 and the second connecting portion 26 are parallel to each other.

The first connecting portion 25 and the second connecting portion 26 may both be plate-shaped structures, the first connecting portion 25 and the second connecting portion 26 are disposed opposite to and spaced apart from each other in the direction perpendicular to the arrangement direction of the first assembly portion 22 and the second assembly portion 23, and the first connecting portion 25 and the second connecting portion 26 are parallel to each other, such that the mounting post 20 can form a "Z"-shaped structure, which is more conducive to enhancing the structural strength of the mounting post 20. When a plurality of mounting frames 30 are assembled on the same mounting post 20 simultaneously, the risk of deformation of the mounting post 20 is further reduced, and the mounting post 20 is reliably supported between the mounting beam 12 and the bottom wall 13 of the mounting space 11, which is more conducive to enhancing the structural strength of the energy storage case 100.

In the above technical solution, the first connecting portion 25 and the second connecting portion 26 are disposed in parallel, such that the mounting post 20 can form a "Z"-shaped structure, which is more conducive to enhancing the structural strength of the mounting post 20. When a plurality of mounting frames 30 are assembled on the same mounting post 20 simultaneously, the risk of deformation of the mounting post 20 is further reduced, and the mounting post 20 is reliably supported between the mounting beam 12 and the bottom wall 13 of the mounting space 11, which is more conducive to enhancing the structural strength of the energy storage case 100.

According to some embodiments of the present application, as shown in FIG. 4, a plurality of mounting beams 12 may be provided, the plurality of mounting beams 12 are sequentially arranged in the first direction, and the mounting post 20 is connected between each of the mounting beams 12 and the bottom wall 13. The first direction is perpendicular to the height direction of the energy storage case 100.

As shown in FIG. 4, when the energy storage case 100 is placed in the direction shown in FIG. 4, the X direction in FIG. 4 is the first direction. A plurality of mounting beams 12 are provided, and the number of the mounting beams 12 may be set to two, three, four, etc. The plurality of mounting beams 12 are sequentially spaced apart in the first direction. The plurality of mounting beams 12 may be parallel to each other, and the spacing distance between any two adjacent mounting beams 12 in the first direction is the same. The mounting post 20 is connected between each mounting beam 12 and the bottom wall 13. Since a plurality of mounting beams 12 are provided, and the mounting post 20 is connected between each of the mounting beams 12 and the bottom wall 13, more mounting frames 30 can be disposed in the mounting space 11 of the energy storage case 100, such that more energy storage units can be placed in the energy storage case 100 simultaneously, thereby improving the energy density of the energy storage case 100. In addition, the number of the mounting posts 20 to be provided can also be increased, and a plurality of mounting posts 20 can be supported between the corresponding mounting beams 12 and the bottom wall 13 of the mounting space 11 simultaneously, which can further enhance the structural strength of the energy storage case 100, thereby further reducing the risk of deformation of the energy storage case 100 and thus further prolonging the service life of the energy storage case 100.

In the above technical solution, since a plurality of mounting beams 12 are provided, and the mounting post 20 is connected between each of the mounting beams 12 and the bottom wall 13, more mounting frames 30 can be disposed in the mounting space 11 of the energy storage case 100, such that more energy storage units can be placed in the energy storage case 100 simultaneously, thereby improving the energy density of the energy storage case 100. In addition, the number of the mounting posts 20 to be provided can also be increased, and a plurality of mounting posts 20 can be supported between the corresponding mounting beams 12 and the bottom wall 13 of the mounting space 11 simultaneously, which can further enhance the structural strength of the energy storage case 100, thereby further reducing the risk of deformation of the energy storage case 100 and thus further prolonging the service life of the energy storage case 100.

According to some embodiments of the present application, as shown in FIG. 4, a plurality of mounting posts 20 are connected between each mounting beam 12 and the bottom wall 13, and the plurality of mounting posts 20 are sequentially arranged in the second direction. The first direction, the second direction, and the height direction of the energy storage case 100 are perpendicular to each other.

As shown in FIG. 4, when the energy storage case 100 is placed in the direction shown in FIG. 4, the Y direction in FIG. 4 is the second direction. A plurality of mounting posts 20 are connected between each mounting beam 12 and the bottom wall 13, and a variable number of mounting posts 20, such as two, three, or four, may be connected between each mounting beam 12 and the bottom wall 13. The plurality of mounting posts 20 are sequentially spaced apart in the second direction, and the plurality of mounting posts 20 may be parallel to each other. In the second direction, the spacing distance between any two adjacent mounting posts 20 is the same. Since a plurality of mounting posts 20 are connected between each mounting beam 12 and the bottom wall 13, and the plurality of mounting posts 20 are sequentially arranged in the second direction, the mounting frame 30 can be fixedly assembled with the plurality of mounting posts 20 simultaneously, and the plurality of mounting posts 20 can support one mounting frame 30 simultaneously, thereby improving the positional stability of the mounting frame 30. In addition, the number of the mounting posts 20 can be further increased, and more mounting posts 20 can be supported between the corresponding mounting beams 12 and the bottom wall 13 of the mounting space 11 simultaneously, which can further enhance the structural strength of the energy storage case 100, thereby further reducing the risk of deformation of the energy storage case 100 and thus further prolonging the service life of the energy storage case 100.

In the above technical solution, since a plurality of mounting posts 20 are connected between each mounting beam 12 and the bottom wall 13, and the plurality of mounting posts 20 are sequentially arranged in the second direction, the mounting frame 30 can be fixedly assembled with the plurality of mounting posts 20 simultaneously, and the plurality of mounting posts 20 can support one mounting frame 30 simultaneously, thereby improving the positional stability of the mounting frame 30. In addition, the number of the mounting posts 20 can be further increased, and more mounting posts 20 can be supported between the corresponding mounting beams 12 and the bottom wall 13 of the mounting space 11 simultaneously, which can further enhance the structural strength of the energy storage case 100, thereby further reducing the risk of deformation of the energy storage case 100 and thus further prolonging the service life of the energy storage case 100.

According to some embodiments of the present application, as shown in FIG. 8, the bottom wall 13 of the mounting space 11 has a drainage hole 14, and a drainage valve 15 is provided in the drainage hole 14.

The bottom wall 13 of the mounting space 11 is provided with the drainage hole 14. The drainage hole 14 penetrates through the bottom wall 13 of the mounting space 11 in the thickness direction of the bottom wall 13 of the mounting space 11. The drainage valve 15 may be provided in the drainage hole 14. As an example, a plurality of drainage holes 14 and a plurality of drainage valves 15 may be provided, and the plurality of drainage holes 14 and the plurality of drainage valves 15 are assembled in one-to-one correspondence, that is, one drainage hole 14 is provided with one drainage valve 15. By providing the drainage hole 14 and the drainage valve 15, when liquids in the mounting space 11 of the energy storage case 100 accumulate at the bottom wall 13 of the mounting space 11, the liquids can be discharged out of the energy storage case 100 through the drainage valve 15, thereby reducing the risk of liquid accumulation within the mounting space 11 of the energy storage case 100, lowering the risk of short circuit of the energy storage unit inside the energy storage case 100 caused by the accumulated liquid, and further reducing the risk of electric shock to the user.

In the above technical solution, by providing the drainage hole 14 and the drainage valve 15, when liquids in the mounting space 11 of the energy storage case 100 accumulate at the bottom wall 13 of the mounting space 11, the liquids can be discharged out of the energy storage case 100 through the drainage valve 15, thereby reducing the risk of liquid accumulation within the mounting space 11 of the energy storage case 100, lowering the risk of short circuit of the energy storage unit inside the energy storage case 100 caused by the accumulated liquid, and further reducing the risk of electric shock to the user.

According to some embodiments of the present application, as shown in FIG. 8, the drainage valve 15 may be configured as a one-way valve. By configuring the drainage valve 15 as a guide valve, when liquids in the mounting space 11 of the energy storage case 100 accumulate at the bottom wall 13 of the mounting space 11, the liquids can be discharged out of the energy storage case 100 through the drainage valve 15, thereby reducing the risk of liquid accumulation within the mounting space 11 of the energy storage case 100. In addition, objects outside the energy storage case 100 cannot flow into the mounting space 11 of the energy storage case 100 through the guide valve, thereby improving the cleanliness of the mounting space 11 of the energy storage case 100.

In the above technical solution, by configuring the drainage valve 15 as a guide valve, when liquids in the mounting space 11 of the energy storage case 100 accumulate at the bottom wall 13 of the mounting space 11, the liquids can be discharged out of the energy storage case 100 through the drainage valve 15, thereby reducing the risk of liquid accumulation within the mounting space 11 of the energy storage case 100. In addition, objects outside the energy storage case 100 cannot flow into the mounting space 11 of the energy storage case 100 through the guide valve, thereby improving the cleanliness of the mounting space 11 of the energy storage case 100.

According to some embodiments of the present application, as shown in FIG. 8, a guiding slope 16 is formed on the inner surface of the bottom wall 13, the guiding slope 16 is disposed adjacent to the drainage hole 14, and the guiding slope 16 is adapted to guide liquids to the drainage hole 14.

The guiding slope 16 may be formed on the inner surface of the bottom wall 13, that is, the guiding slope 16 is formed on the upper surface of the bottom wall 13 of the mounting space 11. A plurality of guiding slopes 16 may be provided, the plurality of guiding slopes 16 are disposed adjacent to the corresponding drainage holes 14, respectively, and the guiding slopes 16 are adapted to guide liquids to the corresponding drainage holes 14. When liquids in the mounting space 11 of the energy storage case 100 accumulate at the bottom wall 13 of the mounting space 11, under the guiding effect of the guiding slope 16, the flow of the liquids along the guiding slope 16 to the corresponding drainage hole 14 is facilitated, thereby facilitating the discharge of the liquids in the mounting space 11 of the energy storage case 100 out of the energy storage case 100, and thus enabling rapid discharge of the liquids in the mounting space 11 of the energy storage case 100.

In the above technical solution, by providing the guiding slope 16, when liquids in the mounting space 11 of the energy storage case 100 accumulate at the bottom wall 13 of the mounting space 11, under the guiding effect of the guiding slope 16, the flow of the liquids along the guiding slope 16 to the corresponding drainage hole 14 is facilitated, thereby facilitating the discharge of the liquids in the mounting space 11 of the energy storage case 100 out of the energy storage case 100, and thus enabling rapid discharge of the liquids in the mounting space 11 of the energy storage case 100.

According to some embodiments of the present application, as shown in FIG. 8, the guiding slope 16 is disposed around the drainage hole 14.

The guiding slope 16 may be arc-shaped, or the guiding slope 16 may be annular. The guiding slope 16 is disposed around the drainage hole 14 along the circumferential edge of the drainage hole 14. Since the guiding slope 16 is disposed around the drainage hole 14, when liquids in the mounting space 11 of the energy storage case 100 accumulate at the bottom wall 13 of the mounting space 11, under the guiding effect of the guiding slope 16, the flow of the liquids along the guiding slope 16 to the corresponding drainage hole 14 is further facilitated, thereby further facilitating the discharge of the liquids in the mounting space 11 of the energy storage case 100 out of the energy storage case 100, and thus enabling more rapid discharge of the liquids in the mounting space 11 of the energy storage case 100.

In the above technical solution, since the guiding slope 16 is disposed around the drainage hole 14, when liquids in the mounting space 11 of the energy storage case 100 accumulate at the bottom wall 13 of the mounting space 11, under the guiding effect of the guiding slope 16, the flow of the liquids along the guiding slope 16 to the corresponding drainage hole 14 is further facilitated, thereby further facilitating the discharge of the liquids in the mounting space 11 of the energy storage case 100 out of the energy storage case 100, and thus enabling more rapid discharge of the liquids in the mounting space 11 of the energy storage case 100.

According to some embodiments of the present application, as shown in FIG. 8, the energy storage case 100 may further include a plurality of cover plates 40. The bottom wall 13 of the mounting space 11 has a plurality of wiring holes 17, and the plurality of cover plates 40 are respectively adapted to cover the plurality of wiring holes 17.

The bottom wall 13 of the mounting space 11 has a plurality of wiring holes 17, and the number of the plurality of wiring holes 17 provided is the same as the number of the plurality of cover plates 40 provided. The plurality of wiring holes 17 and the plurality of cover plates 40 are assembled in one-to-one correspondence, and the plurality of cover plates 40 respectively cover the plurality of wiring holes 17, to enclose the wiring holes 17. Electrical components inside the energy storage case 100 are connected to the outside of the energy storage case 100 through wire harnesses. There may be a plurality of wire harnesses. The plurality of wire harnesses may penetrate through the plurality of wiring holes 17, respectively. After the wire harnesses penetrate through the corresponding wiring holes 17 and the corresponding cover plates 40, the cover plates 40 cover the corresponding wiring holes 17 to enclose the wiring holes 17, thereby reducing the risk of objects outside the energy storage case 100 entering the energy storage case 100 through the wiring holes 17. In addition, by providing a plurality of wiring holes 17, after the wire harnesses penetrate through the corresponding wiring holes 17, it is conducive to the mounting of the cover plates 40 after threading, thereby improving the assembly efficiency of the energy storage case 100.

In the above technical solution, by providing a plurality of cover plates 40 and a plurality of wiring holes 17, a plurality of wire harnesses may penetrate through the plurality of wiring holes 17, respectively. After the wire harnesses penetrate through the corresponding wiring holes 17 and the corresponding cover plates 40, the cover plates 40 cover the corresponding wiring holes 17 to enclose the wiring holes 17, thereby reducing the risk of objects outside the energy storage case 100 entering the energy storage case 100 through the wiring holes 17. In addition, by providing a plurality of wiring holes 17, after the wire harnesses penetrate through the corresponding wiring holes 17, it is conducive to the mounting of the cover plates 40 after threading, thereby improving the assembly efficiency of the energy storage case 100.

According to some embodiments of the present application, as shown in FIGs. 1 and 2, the case body 10 may further define an electrical compartment 50, and the electrical compartment 50 is disposed at the end portion of the energy storage case 100.

The electrical compartment 50 may be further defined in the case body 10, and the electrical compartment 50 is configured to mount electrical members. In the first direction, the electrical compartment 50 is disposed at the end portion of the energy storage case 100. By disposing the electrical compartment 50 at the end portion of the energy storage case 100, when the electrical members in the electrical compartment 50 malfunction, on-site maintenance of the electrical members in the electrical compartment 50 is facilitated, thereby facilitating on-site maintenance of the energy storage case 100.

According to some embodiments of the present application, as shown in FIG. 7, the mounting frame 30 may further be provided with a leakage hole 35. When liquids accumulate on the mounting frame 30, the liquids on the mounting frame 30 can flow to the bottom wall 13 of the mounting space 11 through the leakage hole 35.

According to some embodiments of the present application, the present application further provides an energy storage device. The energy storage device includes an energy storage unit and an energy storage case 100. The energy storage case 100 is the energy storage case 100 according to the above embodiments, and the energy storage unit is disposed in the mounting space 11 and assembled on the mounting frame 30.

According to some embodiments of the present application, as shown in FIGs. 4 to 8, the present application provides an energy storage case 100. The energy storage case 100 includes a case body 10, a mounting frame 30, and a mounting post 20. The case body 10 defines a mounting space 11, a mounting beam 12 is provided in the mounting space 11 and is disposed at the top of the mounting space 11, the mounting beam 12 is fixedly connected to the case body 10, a bottom wall 13 of the mounting space 11 is opposite to and spaced apart from the mounting beam 12 in the height direction of the energy storage case 100, and the bottom wall 13 of the mounting space 11 is a plate-shaped structure. The mounting post 20 is disposed in the mounting space 11, and two ends of the mounting post 20 are fixedly connected to the mounting beam 12 and the bottom wall 13 of the mounting space 11, respectively.

The mounting frame 30 is disposed in the mounting space 11 and is provided with a limiting portion 31. The limiting portion 31 is inserted into and fitted with an insertion hole 32 of the mounting post 20, and the mounting frame 30 is connected to the mounting post 20 by riveting. The mounting frame 30 has a through hole structure 33, the inner wall of the through hole structure 33 is connected to a flanged structure 34, the flanged structure 34 is configured as the limiting portion 31, and the flanged structure 34 is disposed in the insertion hole 32 in a penetrating manner. The bottom wall 13 of the mounting space 11 has a drainage hole 14, and a drainage valve 15 is provided in the drainage hole 14. A guiding slope 16 is formed on the inner surface of the bottom wall 13 of the mounting space 11, the guiding slope 16 is disposed adjacent to the drainage hole 14, and the guiding slope 16 is adapted to guide liquids to the drainage hole 14. The bottom wall 13 of the mounting space 11 has a plurality of wiring holes 17, and a plurality of cover plates 40 are respectively adapted to cover the plurality of wiring holes 17. The case body 10 further defines an electrical compartment 50. In the first direction, the electrical compartment 50 is disposed at the end portion of the energy storage case 100.

It should be noted that in the absence of conflicts, the embodiments and features in the embodiments in the present application may be combined with each other.

In the description of this specification, the description of reference terms "one embodiment", "some embodiments", "a schematic embodiment", "an example", "a specific example", or "some examples" and the like means that a particular feature, structure, material, or characteristic described in connection with the embodiments or examples is included in at least one embodiment or example of the present application. In the specification, the schematic description of the aforementioned terms does not necessarily refer to the same embodiment or example. Moreover, the specific feature, structure, material, or characteristic described may be combined in a suitable manner in any one or more embodiments or examples.

Although the embodiments of the present application have been illustrated and described, it will be appreciated by those of ordinary skill in the art that various changes, modifications, replacements, and variations can be made to these embodiments without departing from the principle and purpose of the present application, and the scope of the present application is defined by the claims and equivalents thereof.

## Claims

1. An energy storage case, comprising:
a case body, wherein the case body defines a mounting space, a mounting beam is provided in the mounting space and is disposed at a top of the mounting space, the mounting beam is fixed to the case body, a bottom wall of the mounting space is opposite to and spaced apart from the mounting beam in a height direction of the energy storage case, and the bottom wall of the mounting space is a plate-shaped structure;
a mounting post, wherein the mounting post is disposed in the mounting space, and two ends of the mounting post are fixedly connected to the mounting beam and the bottom wall of the mounting space, respectively.

2. The energy storage case according to claim 1, further comprising: a mounting frame, wherein the mounting frame is disposed in the mounting space and is provided with a limiting portion, the limiting portion being fitted and assembled with the mounting post to limit movement of the mounting frame in the height direction of the energy storage case, and the mounting frame being connected to the mounting post by riveting.

3. The energy storage case according to claim 2, wherein the mounting post has an insertion hole, and the limiting portion is assembled in the insertion hole and is adapted to abut against an inner wall of the insertion hole.

4. The energy storage case according to claim 3, wherein the mounting frame has a through hole structure, an inner wall of the through hole structure is connected to a flanged structure bent toward the mounting post, the flanged structure is configured as the limiting portion, and the flanged structure is disposed in the insertion hole in a penetrating manner.

5. The energy storage case according to claim 2, wherein the mounting post has a first riveting hole, and the mounting frame has a second riveting hole corresponding to the first riveting hole.

6. The energy storage case according to any one of claims 2 to 5, wherein the mounting post comprises: a first assembly portion, a second assembly portion, and a third assembly portion, the first assembly portion and the third assembly portion are disposed on the same side of the second assembly portion, the second assembly portion is fitted and assembled with a corresponding mounting frame, and the first assembly portion and the third assembly portion are fitted and assembled with a corresponding mounting frame.

7. The energy storage case according to claim 6, wherein the mounting post further comprises: a first connecting portion and a second connecting portion, the first connecting portion is connected between the first assembly portion and the second assembly portion, and the second connecting portion is connected between the second assembly portion and the third assembly portion.

8. The energy storage case according to claim 7, wherein the first connecting portion and the second connecting portion are parallel to each other.

9. The energy storage case according to any one of claims 1 to 8, wherein a plurality of mounting beams are provided, the plurality of mounting beams are sequentially arranged in a first direction, the mounting post is connected between each of the mounting beams and the bottom wall, and the first direction is perpendicular to the height direction of the energy storage case.

10. The energy storage case according to claim 9, wherein a plurality of mounting posts are connected between each of the mounting beams and the bottom wall, the plurality of mounting posts are sequentially arranged in a second direction, and the first direction, the second direction, and the height direction of the energy storage case are perpendicular to each other.

11. The energy storage case according to any one of claims 1 to 10, wherein the bottom wall of the mounting space has a drainage hole, and a drainage valve is provided in the drainage hole.

12. The energy storage case according to claim 11, wherein the drainage valve is configured as a one-way valve.

13. The energy storage case according to claim 11 or 12, wherein a guiding slope is formed on an inner surface of the bottom wall, the guiding slope is disposed adjacent to the drainage hole, and the guiding slope is adapted to guide liquids to the drainage hole.

14. The energy storage case according to claim 13, wherein the guiding slope is disposed around the drainage hole.

15. The energy storage case according to any one of claims 1 to 14, further comprising: a plurality of cover plates, wherein the bottom wall of the mounting space has a plurality of wiring holes, and the plurality of cover plates are respectively adapted to cover the plurality of wiring holes.

16. The energy storage case according to any one of claims 1 to 15, wherein the case body further defines an electrical compartment, and the electrical compartment is disposed at an end portion of the energy storage case.

17. An energy storage device, comprising:
an energy storage unit;
an energy storage case, wherein the energy storage case is the energy storage case according to any one of claims 1 to 16, and the energy storage unit is disposed in the mounting space and is assembled on the mounting frame.
